# EUROPÄISCHE PATENTSCHRIFT

(11) **EP 1 922 222 B1**
(45) Veröffentlichungstag und Bekanntmachung des Hinweises auf die Patenterteilung: **11.07.2012**
(21) Anmeldenummer: 06762903.0
(22) Anmeldetag: 29.07.2006
(51) Int. Cl.: B60K 31/02

(54) **BEDIENEINRICHTUNG FÜR EIN FAHRERASSISTENZSYSTEM FÜR EIN KRAFTFAHRZEUG**
OPERATOR CONTROL DEVICE FOR A DRIVER ASSISTANT SYSTEM FOR A MOTOR VEHICLE
DISPOSITIF DE COMMANDE D'UN SYSTEME D'ASSISTANCE AU CONDUCTEUR D'UN VEHICULE AUTOMOBILE

(30) Priorität: 05.08.2005 DE 102005036923
(43) Veröffentlichungstag der Anmeldung: 21.05.2008
(73) Patentinhaber: Bayerische Motoren Werke Aktiengesellschaft, 80809 München (DE)
(72) Erfinder: MAYSER, Christoph, 82008 Unterhaching (DE); NAAB, Karl, 85457 Wörth (DE)
(86) Internationale Anmeldenummer: PCT/EP2006/007531
(87) Internationale Veröffentlichungsnummer: WO 2007/017148

(56) Entgegenhaltungen:
- EP-A2- 1 129 885
- WO-A2-2004/053661
- DE-A1- 10 064 307
- DE-A1- 19 941 947
- US-A- 5 088 043
- US-A- 5 125 485
- US-A- 5 335 743
- US-A- 5 477 457
- US-A- 5 949 149
- US-A- 6 081 763
- US-A1- 2002 077 216
- US-A1- 2003 000 763
- US-A1- 2003 184 151
- US-A1- 2003 209 376
- US-A1- 2004 020 698
- US-B1- 6 260 432
- US-B1- 6 282 482
- US-B1- 6 373 400

## Beschreibung

Die Erfindung betrifft ein Fahrzeug mit einem Fahrerassistenzsystem sowie mit einer Bedieneinrichtung für das Fahrerassistenzsystem, wobei das Fahrerassistenzsystem einen Regler zur Regelung der Beschleunigung des Kraftfahrzeugs gemäß einer Sollbeschleunigung aufweist.

Allgemein sind Fahrerassistenzsysteme zur Längsführung in unterschiedlicher Wirkungstiefe realisierbar. So zeigen z.B. informierende und/oder warnende Abstands-Informationssysteme dem Fahrer zu kurze Folgeabstände auf akustischem, optischem oder haptischem Wege an. Der Fahrer kann dann entscheiden, ob und wie er situationsangepasst eine Korrektur seiner Fahrgeschwindigkeit und des momentanen Abstands veranlasst. Semi-automatische empfehlende Assistenzsysteme verwenden z.B. ein sogenanntes aktives Gaspedal, das den Fahrer direkt über künstliche Zusatzkräfte im Gaspedal über die momentan "richtige" Gaspedalstellung informiert, die zur Einhaltung einer angepassten Geschwindigkeit oder des richtigen Folgeabstands notwendig ist. Der Fahrer entscheidet selber, in welcher Weise er die vom System vorgeschlagene direkte Stellgrößeninformation umsetzt. Automatische regelnde Abstandsregelsysteme, wie ACC, versuchen, die Längsführung für bestimme Fahrsituationen vollständig zu übernehmen.

Die Fahrgeschwindigkeitsregelung oder das ACC-System ermöglichen es in der Regel, dass der Fahrer die Wunschgeschwindigkeit mit einem Bedienelement, zum Beispiel ein Lenkstockhebel oder Tasten, am Lenkrad setzt und das System dann die Geschwindigkeit gegebenenfalls in Abhängigkeit des zeitlichen Abstands zum Vorausfahrenden regelt. Der Fahrer kann die Wunschgeschwindigkeit mit dem Lenkstockhebel bzw. den Tasten verändern oder das System mit diesen Bedienelementen deaktivieren. Weiter ist es dem Fahrer in der Regel möglich, das System mit dem Gaspedal zu übersteuern (gleich höhere Geschwindigkeit), wodurch die Regelung zeitweise außer Kraft gesetzt wird, und das System mit dem Bremspedal zu deaktivieren. Gemäß dieser bisher bekannten Systemphilosophie kann der Fahrer entweder dem System vertrauten und das System fahren lassen, wobei gewisse Vorgaben gemacht werden können, wie oben beschrieben, oder das System abschalten und selbst fahren. Lässt der Fahrer das System fahren, so wird er zum Beobachter/Überwacher des Systems, der das System indirekt beeinflussen kann, ist aber nicht aktiv am Regelungsprozess (Geschwindigkeit und Abstand einhalten) beteiligt. Erreicht das System eine seiner Grenzen, erfordert der Schritt, die aktive Kontrolle wieder selbst zu übernehmen, einen Rollenwechsel. Dieser Rollenwechsel fällt vielen Fahrern schwer und wird daher solange wie möglich herausgezögert.

Nach dem derzeitigen und in absehbarer Zukunft zu erwartenden Stand der Technik ist es nicht möglich, dem Fahrerassistenzsystem die gesamte Längsführung zu übertragen. Es bleiben eine Vielzahl von Fahrsituationen übrig, die das automatische Abstandsregelsystem im realistischen Fahrbetrieb nicht oder nur unzureichend bewältigen kann. Wesentliche Faktoren sind einerseits die eingeschränkte Erkennungsleistung heute üblicher Fahrumgebungssensoriken, andererseits ist der entscheidende Faktor jedoch generischer Natur: Aus der Sicht der gesamten Fahraufgabe erfolgt durch ACC eine teilweise Vollautomatisierung von einzelnen Aufgaben innerhalb der gesamten Längsführungsaufgabe, die mit den verbleibenden Bedien- und Regelungstätigkeiten des Fahrers in erheblichem Maße interferiert. Der Fahrer hat mit dem automatischen System zu interagieren. Dieses ist im Falle des ACC im Wesentlichen nur auf Abstandshaltung oder bei freier Fahrt auf Einhaltung einer Wunschgeschwindigkeit programmiert. Autofahren ist hingegen ein dynamischer Prozess, bei dem in der Regel nicht ausschließlich konstante Zeitlücken oder fixe Wunschgeschwindigkeiten einzuhalten sind, sondern es treten in einer signifikanten Häufigkeit Abweichungen von diesen einfachen Regeln des Systems ACC auf. Dadurch sind zahlreiche Konflikte mit den Fahrererwartungen oder einem fahrertypischen Verhalten vorprogrammiert.

Beispiele hierfür sind Einscherer, abbiegende Fahrzeuge, zu kurze Sensor-Reichweiten, späte Reaktion bei schneller Annährung, ungenaue/unsichere Spurzuordnung, Spurwechsel, begrenzte Verzögerungsleistungen, keine Reaktion auf stillstehende Objekte, Fehlinterpretationen angeblich relevanter Objekte, Nicht-Detektion von relevanten Objekten usw..

Wie zuvor dargelegt, kann der Fahrer in diesen Fällen bei heutigen Funktions- und Bedienauslegungen beim ACC das System entweder abschalten oder selbst die Kontrolle übernehmen, indem er den AUS-Knopf betätigt, oder wenn eine andere als vom System eingeleitete Verzögerung notwendig wird, es zusammen mit der Betätigung des Bremspedals abschaltet. Um eine höhere als die vom System vorgegebene Beschleunigung zu erzeugen, muss der Fahrer das Gaspedal betätigen. Die Systemfunktion geht in diesem Falle kurzzeitig in den Hintergrund und wird bei Loslassen des Gaspedals wieder aktiv. In beiden Fällen wird mit dem Abschalten ein Bruch im natürlichen dynamischen Fahrfluss erzeugt. Ein Wiedereinschalten, das oft kurz nach dem Abschaltvorgang erfolgt, bewirkt in der Regel einen deutlich wahrnehmbaren Einschwingvorgang. Weiter ist der Eingriff auch in beiden Fällen mit erheblichem motorischem Bedienaufwand verbunden.

Um eine bessere Akzeptanz und ein harmonischeres Zusammenspiel des Fahrers mit dem Teil-Automatisierungssystem zu erreichen, empfiehlt es sich daher, Maßnahmen vorzusehen, die eine bessere Einbindung des Fahrers ermöglichen, um einerseits seine abweichende Einschätzung der Fahrsituation, insbesondere aber seine Absicht, dem System besser mitzuteilen, damit der gesamte Fahrprozess homogener abläuft.

Diesbezüglich beschreibt die DE 103 03 611 A1 einen Geschwindigkeitsregler mit mehreren Betriebsmodi, bei dem als ein Betriebsmodus ein "Stopp+Go-Modus" und als ein zweiter Betriebsmodus ein ACC-Modus vorgesehen sind. In diesen beiden Modi ist es möglich, dass der Fahrer das Gaspedal betätigt und so die S+G-Regelfunktion bzw. die ACC-Regelfunktion übersteuert, wobei diese Funktionen während der Übersteuerung ausgesetzt werden und nach der Übersteuerung wieder aufgenommen werden.

Weiter offenbart die DE 10 2004 040 532 A1 ein Fahrzeugobjekterfassungssystem, Nachfolgesteuersystem und Fahrzeugsteuersystem, das einen Beschleunigungs-/Verzögerungswunsch-Detektor zum Erfassen eines Wunschs eines Insassen nach Beschleunigung oder Verzögerung auf der Basis der Betätigung eines Bremspedals durch den Insassen, und/oder der Betätigung eines Gaspedals durch den Insassen und/oder einer Betätigung eines Schalters durch den Insassen und/oder einer Stimme des Insassen aufweist. Auf Grundlage des erfassten Beschleunigungs-/Verzögerungswunsches wird ein Erfassungsbereich des für das ACC-System verwendeten Sensors verändert. Insbesondere wird bei einem Wunsch nach Verzögerung der Erfassungsbereich seitlich vergrößert, wenn ein Wunsch des Insassen nach Verzögerung erfasst wird, damit seitlich vor das zu regelnde Fahrzeug einfahrende Fahrzeuge früher erfasst werden und sich das System automatisch auf diese einstellt. Im Gegensatz dazu wird der Erfassungsbereich seitlich verkleinert, wenn der Beschleunigungs-/Verzögerungs-Detektor einen Wunsch nach Beschleunigung erfasst, damit eine unnötige Ausführung einer Fahrzeugsteuerung aufgrund von seitlich einfahrenden Fahrzeugen verhindert wird.

Die DE 103 43 178 A1 offenbart ein Fahrerassistenzsystem mit variabler Längsführungsstrategie, das ein Strategiemodul zur variablen Bestimmung der anzuwendenden Längsführungsstrategie aufweist. Hier sind unterschiedliche voreingespeicherte oder voreinspeicherbare Längsführungsstrategien, wie z.B. "Komfortbetont", "Normal" oder "Dynamisch", vorhanden, zwischen denen der Fahrer vor Antritt der Fahrt und gegebenenfalls auch während der Fahrt wählen kann. Die Strategien unterscheiden sich grundsätzlich durch unterschiedlich positive/negative Beschleunigungsverhalten. Bedienelemente zur Auswahl bzw. zum Einspeichern der unterschiedlichen Längsführungsstrategien sind nicht beschrieben.

Die DE 196 40 694 A1 beschreibt ein Verfahren und eine Vorrichtung zur Steuerung der Fahrgeschwindigkeit eines Fahrzeugs, wobei die Begrenzung der Geschwindigkeitsänderung des Fahrzeugs abhängig von dem vom Fahrer gewünschten dynamischen Verhalten des Fahrzeugs, insbesondere abhängig vom Schaltzustand wenigstens eines vom Fahrer betätigbaren Bedienelements, aufgehoben bzw. auf höhere Werte gesetzt wird. Hier wird die Beschleunigungs- bzw. Verzögerungsdynamik eines Fahrgeschwindkeitssteuersystems einstellbar ausgeführt, wobei der Fahrer durch die Einstellung der Beschleunigungs- bzw. Verzögerungsdynamik in das System eingebunden wird. Da hier die Grenzwerte der vom System eingestellten maximalen Beschleunigung bzw. Verzögerung verändert werden, wird eine Wirkung des Eingriffs nur dann deutlich, wenn die automatische Fahrgeschwindigkeitsregelung eine Beschleunigung, Beschleunigungsänderung, Verzögerung und/oder Verzögerungsänderung vornimmt, die über den alten Grenzwerten liegt.

Aus der DE 100 19 190 A1 ist weiter ein Verfahren zur adaptiven Abstands- und/oder Fahrgeschwindigkeitsregelung bei einem Kraftfahrzeug bekannt, wobei die die Sollbeschleunigung repräsentierende Größe wenigstens in Abhängigkeit von wenigstens einem Basiswert gebildet und/oder begrenzt wird, und externe und interne Beschleunigungsanforderungen durch eine entspreche Vorgabe von Basiswerten umsetzbar sind. Insbesondere soll die Fahrzeugbeschleunigung aus Komfort- und Sicherheitsgründen nicht in belieben Sprüngen verändert werden, sondern der als zeitliche Änderung der Beschleunigung definierte Ruck wird in positiver und negativer Richtung durch Grenzwerte beschränkt. Eine neue Sollbeschleunigung bestimmt sich dann anhand eines Minimum-Basiswerts, eines Maximum-Basiswerts, der Grenzwerte und der vorherigen Sollbeschleunigung. Der Maximum-Basiswert ist derjenige Wert, den eine vom ACC-Regler vorgegebene Sollbeschleunigung mindestens überschreiten muss, damit eine positive Beschleunigungsänderung des Fahrzeugs auftritt und der Minimum-Basiswert ist derjenige, den eine vom ACC-Regler vorgegebene Sollbeschleunigung mindestens unterschreiben muss, damit eine negative Beschleunigungsänderung des Fahrzeugs auftritt. Bei aktiver Regelung werden der Minimum-Basiswert und der Maximum-Basiswert aus einem aktuellen Basiswert und dem letzten Sollwert gebildet. Bei allen Übergängen in den Antriebsfall oder den Aktiv-Control-Mode werden der Minimum-Basiswert und der Maximum-Basiswert auf den aktuellen Basiswert initialisiert. Bei Regelung mit Bremseingriff werden der Minimum-Basiswert und der Maximum-Basiswert aus von einem Verzögerungsregler bzw. einer aktiven Bremse bereitgestellten Basiswerten und dem letzten Sollwert gebildet, wobei, wenn der Sollwert unterhalb der Minimalbeschleunigung des Antriebs liegt, aber der Bremseingriff noch nicht aktiviert ist, der Maximum-Basiswert durch einen Minimalbeschleunigungswert und der Minimum-Basiswert durch einen um ein einen Bremseinschalthysteresewert verminderten Minimalbeschleunigungswert gebildet werden. Wenn der Fahrer des Kraftfahrzeugs eine größere Motorleistung als das ACC-System anfordert (Fahrerübertreten) werden der Maximum-Basiswert als aktueller Basiswert und der Minimum-Basiswert als ein nicht näher bestimmter Wert a_{DrvMin} gesetzt. Auch hier werden keine besonderen Bedienelemente zur Eingabe der Fahreranforderung beschrieben.

Allen diesen Systemen ist gemeinsam, dass der Fahrer immer vor der Entscheidung steht, ob er das System fahren lassen möchte oder ob er selbst fahren möchte. Ein Eingriff in das System, der dieses nicht zumindest vorübergehend abschaltet, ist nur in indirekter Weise möglich, weswegen kritischen Situationen nicht adäquat durch ein Abbremsen oder Beschleunigen unter Beibehaltung der aktiven Regelung ausgewichen werden kann.

Die DE 103 43 177 A1 offenbart weiter eine Mensch/Maschine-Schnittstelle für ein Fahrerassistenzsystem eines Kraftfahrzeugs, mit einer Eingabeeinrichtung zur Eingabe mindestens eines Befehls zur Aktivierung einer Funktion des Fahrerassistenzsystems, einem Speicher, in dem mehrere Aktivierungsbedingungen für die Funktion gespeichert sind, und eine Steuereinheit, die bei Eingabe eines Befehls die Aktivierungsbedingungen prüft, wobei eine von der Steuereinheit angesteuerte Ausgabeeinrichtung, die, wenn eine Aktivierungsbedingung nicht erfüllt ist, eine diese Aktivierungsbedingung identifizierende Textmeldung ausgibt. Auf diese Weise kann dem Fahrer ein Grund, weshalb sich eine bestimmte Funktion nicht aktivieren lässt, mitgeteilt werden. Als Eingabeeinrichtung wird beispielsweise ein am Lenkrad des Fahrzeugs angeordneter Multifunktionshebel beschrieben, der es dem Fahrer ermöglicht, wahlweise die RCC-Funktion oder die LSF-Funktion zu aktivieren, die aktuelle Geschwindigkeit des Fahrzeugs als Wunschgeschwindigkeit zu setzen, die Wunschgeschwindigkeit zu erhöhen oder zu verringern und die ACC- bzw. LSF-Funktion vorübergehend auszusetzen oder wieder aufzunehmen.

Die US 6,282,482 B1 offenbart ein Fahrzeug mit einem Fahrerassistenzsystem nach dem Oberbegriff das Anspruchs 1.

Demgemäß liegt der Erfindung die Aufgabe zugrunde, eine verbesserte Bedieneinrichtung für ein Fahrerassistenzsystem für ein Kraftfahrzeug anzugeben, dass einen Regler zur Regelung der Beschleunigung des Kraftfahrzeugs gemäß einer Sollbeschleunigung aufweist.

Erfindungsgemäß wird diese Aufgabe gelöst durch ein Fahrzeug mit den Merkmalen des Anspruchs 1.

Demzufolge bietet die Erfindung eine sorgfältige Einbettung der Eingriffsmöglichkeiten auf das Fahrerassistenzsystem in die natürlichen und intuitiven Handlungen und Reaktionen des Fahrers. Durch die Verwendung eines Beschleunigungs-Bedienelements zur Einkoppelung einer vom Fahrer des Kraftfahrzeugs vorgebbaren Zusatzbeschleunigung wird es dem Fahrer durch eine überlagerte Regelung ermöglicht, zusätzliche Beschleunigungsanforderungen in das Geschwindigkeitsregelsystem einzuspeisen. Durch das Regelungskonzept werden die Fahreranforderungen und die Systemanforderungen zu einer Gesamt-Beschleunigungsanforderung verarbeitet und eingeregelt. Durch diese Vorgehensweise ändert sich der Betriebsmodus so, dass jetzt der Fahrer gemeinsam mit dem System fährt. Dadurch muss der Fahrer das System nicht so häufig abschalten. Der Fahrer kann das System in bestimmten Situationen übersteuern (durch eine zusätzliche Beschleunigungsanforderung), ohne es abzuschalten. Ist die Fahrsituation bewältigt, zieht sich der Fahrer zurück (beendet seine zusätzliche Anforderung) und das System übernimmt automatisch wieder die komplette Regelung. Der Fahrer ist also aktiv am Regelungsprozess beteiligt und somit "in the Loop".

Erfindungsgemäß wird demzufolge der Automatisierungsgrad, z.B. der ACC-Funktion, derart reduziert, dass der Fahrer die vom ACC-Regler vorgesehene Sollbeschleunigung oder Sollverzögerung (= negative Sollbeschleunigung) des Fahrzeugs über das Beschleunigungs-Bedienelement so modifizieren kann, dass dadurch sein von ACC-System abweichender Fahrwunsch (Beschleunigungs- oder Fahrgeschwindigkeitswunsch) der gegebenenfalls durch seine vom ACC-System abweichende Einschätzung der Fahrsituation begründet ist, dem im ACC-System vorhandenen Beschleunigungsregler mitteilen kann, ohne dass die ACC-Funktion unterbrochen wird.

Ein derartiges Beschleunigungs-Bedienelement für die Überlagerung des Fahrerwunschs mit einer vom Systemwunsch abweichenden Sollbeschleunigung oder Sollverzögerung kann eine definierte Nullstellung und einen kontinuierlich abgreifbaren positiven und negativen Stellbereich aufweisen. Weiterhin kann es im Verlauf des Stellbereichs einen zusätzlichen Kraftsprung aufweisen, um z.B. auf einen deutlichen Sprung in der Beschleunigungsanforderung hinzuweisen (ähnlich wie beim Kickdown im Gaspedal). Dieses Bedienelement ist vorzugsweise in erreichbarer Griffweite des Fahrers angeordnet, z.B. in der Nähe des Gangwahlhebels, in einem Multifunktions-Lenkrad, in Form eines Lenkstockhebels usw.. Das Bedienelement ist vorzugsweise konstistent zu Fahrererwartungen gewählt, so dass intuitive Fahrerreaktionen für Beschleunigungen und Verzögerungen möglichst ohne reaktive Fehlbedienung ermöglicht werden, beispielsweise bei waagerechter Anordnung des Bedienelements kann folgende Bedieneinrichtung zweckmäßig sein: nach vorne = Systembeschteunigung erhöhen, nach hinten = Systembeschleunigung erniedrigen.

Aufgrund dieser vom Bedienelement durch den Fahrer erzeugten Werte wird die vom System erzeugte Sollbeschleunigung so modifiziert, dass kontinuierlich die Wirkung des Systems abgeschwächt und die Wirkung der Fahrerbedienung verstärkt wird. Die Charakteristiken der Einsteuerung durch das Bedienelement können beliebig linear, progressiv, degressiv, symmetrisch, unsymmetrisch und/oder mit einem eigenen Zeitverhalten gestaltet werden, um den Anforderungen an Dosierbarkeit, Fahrzeugreaktion, Dynamikerlebnis, optimaler Fahrer-Fahrzeug-Regelkreis-Performance usw. zu genügen.

Die Unteransprüche beinhalten vorteilhafte Weiterbildungen und Ausgestaltungen des Gegenstandes des Anspruchs 1.

Das Beschleunigungs-Bedienelement umfasst erfindungsgemäß einen Inkrementgeber mit zwei Richtungen. Der Inkrementgeber mit zwei Richtungen kann hierbei ein analoges oder ein digitales Element sein, das die Funktion hat, eine Bedienungsrichtung, z.B. "nach oben/unten" oder "nach rechts/links", und eine Bedienintensität, z.B. "einen Weg von x % aus der Nullstellung" oder "bis zum Anschlag" oder "x Umdrehungen" oder "x Inkremente" oder eine Kraft oder einen Druck einer Betätigung oder eine Betätigungsgeschwindigkeit oder eine Zeitdauer einer Betätigung, zu erfassen bzw. auszugeben. Es kann sich also z.B. sowohl um einen Weggeber, z.B. in Form eines Potentiometers, als auch um einen Pulsgeber oder einen Sensor oder eine Kombination davon handeln.

Die Beschleunigungseinrichtung nach der Erfindung zeigt vorzugsweise eine eingestellte Beschleunigung und/oder eine vergangene Zeit einer eingestellten Beschleunigung an. Eine solche Anzeige kann direkt am Beschleunigungs-Bedienelement vorgesehen sein, z.B. mittels einer Markierung, oder separat dazu, z.B. über eine analoge oder digitale Anzeigeeinheit.

Das Beschleunigungs-Bedienelement ist nach der Erfindung am Lenkrad des Kraftfahrzeugs angeordnet, weiter erfindungsgemäß Speiche davon. Das Beschleunigungs-Bedienelement nach der Erfindung kann an einer rechten oder linken Speiche des Lenkrads des Kraftfahrzeugs oder beidseitig am Lenkrad angeordnet sein.

In der erfindungsgemäßen Bedieneinrichtung kann ein weiteres Bedienelement, vorgesenen sein vorzugsweise ein Geschwindigkeits-Bedienelement, das einen Inkrementgeber mit zwei Richtungen umfasst, der grundsätzlich dieselbe Funktionsweise haben kann, wie der Inkrementgeber des Beschleunigungs-Bedienelements, um Wunschgeschwindigkeiten zu setzen oder zu verändern. In diesem Fall umfasst das Geschwindigkeits-Bedienelement vorzugsweise ein Rändelrad oder eine Rolle. Eine solche Ausgestaltung wird vorzugsweise auch für das als Inkrementgeber mit zwei Richtungen ausgestaltete Beschteunigungs-Bedienetement gewählt. Als Beschleurügungs-Bedienelement wird vorzugsweise ein analoger oder kontinuierlicher Inkrementgeber und als Geschwindigkeits-Bedienelement ein digitaler oder diskreter Inkrementgeber eingesetzt.

Die erfindungsgemäße Bedieneinrichtung umfasst als weiteres Bedienelement ein Abstands-Bedienelement, das einen Inkrementgeber mit zwei Richtungen umfasst, um Wunschabstände zu setzen. In diesem Fall umfasst das Abstands-Bedienelement weiter eine Wippe. Auch dieser Inkrementgeber kann analog (oder kontinuierlich) oder digital (oder diskret) ausgestaltet sein. Wunschabstände können dann z.B. über eine Stärke oder Dauer einer Betätigung oder eine Anzahl von Betätigungen gesetzt bzw. verändert werden.

Weiter alternativ oder zusätzlich umfasst die erfindungsgemäße Bedieneinrichtung als weiteres Bedienelement vorzugsweise ein Deaktivierungs-Bedienelement, das einen Inkrementgeber mit einer Stufe umfasst, um das Fahrerassistenzsystem zu deaktivieren. In diesem Fall umfasst das Deaktivierungs-Bedienelement weiter vorzugsweise einen Taster. Das Deaktivierungs-Bedienelement kann so ausgestaltet sein, dass eine Betätigung zum Anschalten für eine gewisse Zeit erfolgen muss, um angenommen zu werden, wohingegen eine Betätigung zum Abschalten sofort angenommen wird.

Weiter alternativ oder zusätzlich umfasst die erfindungsgemäße Bedieneinrichtung als weiteres Bedienelement vorzugsweise Geschwindigkeits-Setz-Taster, der einen Inkrementgeber mit einer Stufe umfasst, um eine Ist-Geschwindigkeit als Sollgeschwindigkeit zu setzen.

Weiter alternativ oder zusätzlich erfüllt das Beschleunigungs-Bedienelement bei inaktiviertem Regler zur Regelung der Beschleunigung des Kraftfahrzeugs eine Funktion einer Schaltwippe zur Wahl eines Gangs eines Getriebes des Kraftfahrzeugs.

Das erfindungsgemäße Beschleunigungs-Bedienelement ist also für den Fahrer gut erreichbar am Lenkrad angeordnet . Eine zweckmäßige Ausführung sieht die Anordnung des Beschleunigungs-Bedienelements an der linken Speiche des Lenkrads vor. Weiterhin ist es zweckmäßig, auch die übrigen Bedienelemente der Bedieneinrichtung für das Geschwindigkeits-/Abstandsregelsystem an der linken Speiche des Lenkrads anzuordnen. Erfindungsgemäß sind vorzugsweise vorgesehen:
- Ein analoger Inkrementgeber/Sollwertgeber mit zwei Richtungen, um Beschleunigungsanforderungen einzustellen, wobei der eingestellte Wert, vorzugsweise als Winkel, und die vergangene Zeit diesen Wert einzustellen, vorzugsweise ablesbar sind.
- Ein diskreter Inkrementgeber mit zwei Richtungen, um Wunschgeschwindigkeiten zu setzen (viele Stufen), vorzugsweise ein Rändelrad bzw. eine Rolle.
- Ein Inkrementgeber mit einer Stufe, um das System zu deaktivieren, vorzugsweise ein Taster.
- Ein Inkrementgeber mit einer Stufe, um das System zu aktivieren und/oder zuvor eingestellte Geschwindigkeits- und/oder Beschleunigungswerte wieder aufzunehmen, vorzugsweise ein Taster oder eine mehrfach (auch für andere Funktionen) genutzte Rolle.
- Ein Inkrementgeber mit einer Stufe, um eine Ist-Geschwindigkeit als Sollgeschwindigkeit zu übernehmen, vorzugsweise ein Taster.

Die Erfindung ermöglicht somit eine deutlich bessere Funktion bzw. ein deutlich verbessertes Funktionsverständnis bei sehr geringen Mehrkosten, wobei kein Einfluss auf die Lebensdauer und das Gewicht des Fahrzeugs genommen wird.

Weitere Einzelheiten, Vorteile und Merkmale der vorliegenden Erfindung ergeben sich aus nachfolgender Beschreibung von Ausführungsbeispielen anhand der Zeichnungen. Es zeigen:
- Fig. 1: ein Lenkrad mit einer erfindungsgemäßen Bedieneinrichtung für ein Fahrerassistenzsystem eines Kraftfahrzeugs nach einer vorteilhaften Ausführungsform der Erfindung; und
- Fig. 2: eine Detail-Ansicht der in der Fig. 1 gezeigten erfindungsgemäßen Bedieneinrichtung gemäß der bevorzugten Ausführungsform der Erfindung.

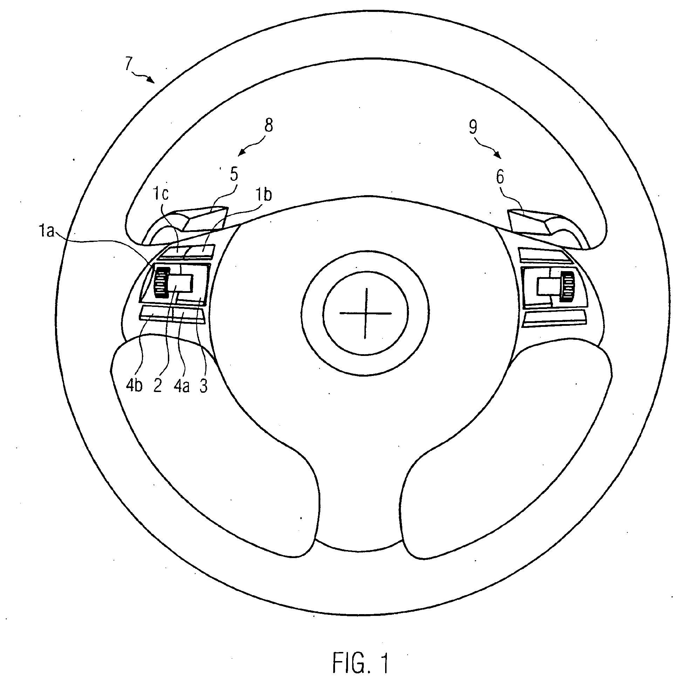

Fig. 1 zeigt ein mit der erfindungsgemäßen Bedieneinrichtung ausgestattetes Lenkrad 7, bei dem sowohl an einer linken Speiche 8 als auch einer rechten Speiche 9 erfindungsgemäße Bedieneinrichtungen vorhanden sind, um dem Fahrer eine Bedienung des Fahrerassistenzsystems sowohl mit der linken als auch mit der rechten Hand zu ermöglichen. Die hier dargestellten Bedienrichtungen sind symmetrisch und in gleicher Ausstattung vorgesehen. Dies ist eine bevorzugte, aber nicht notwendige Ausgestaltung.

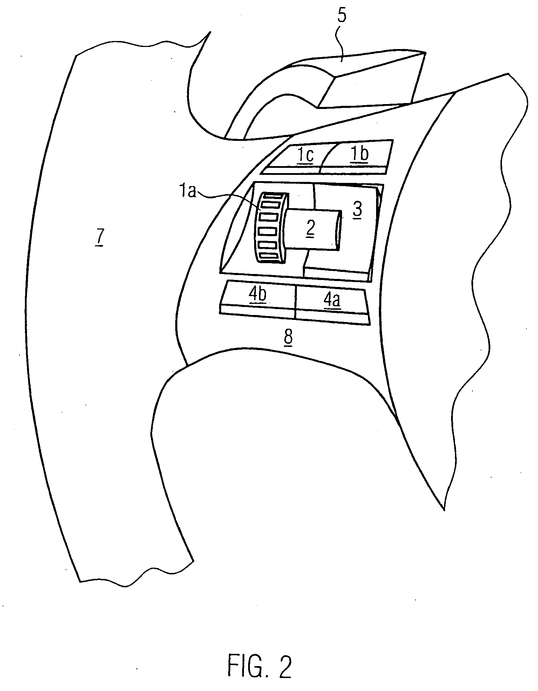

Die linke Speiche 8 des mit der erfindungsgemäßen Bedieneinrichtung versehenen Lenkrads 7 ist zusammen mit der bevorzugten Ausführungsform der erfindungsgemäßen Bedieneinrichtung vergrößert in Fig. 2 dargestellt.

Eine erste Ausgestaltung der hier dargestellten bevorzugten Ausführungsform der erfindungsgemäßen Bedieneinrichtung umfasst ein Beschleunigungs-Bedienelement 1a in Form eines als Rändelrad oder Rolle ausgestellten analogen oder quasi-analogen, d.h., stufenlosen oder sehr fein abgestuften Inkrementgebers, der als nächstes zu dem Griffbereich des Lenkrads 7 liegt. Rechts von dem Beschleunigungs-Bedienelement 1a ist auf der gleichen Achse, aber unabhängig von dem Beschleunigungs-Bedienelement 1a betätigbar, ein Geschwindigkeits-Bedienelement 2 angeordnet, das ebenfalls einen als Rändelrad oder Rolle ausgestalteten Inkrementgeber umfasst. Rechts davon und teilweise unterhalb des Geschwindigkeits-Bedienelements 2 ist ein als Wippe ausgestaltetes Abstands-Bedienelement 3 in Form eines Inkrementgebers mit zwei Richtungen angeordnet.

Ebenfalls in der linken Speiche 8 ist unterhalb dieser aus Beschleunigungs-Bedienelement 1a, Geschwindigkeits-Bedienelement 2 und Abstands-Bedienelement 3 bestehenden Einheit ein Deaktivierungs-Bedienelement 4a, 4b in Form eines einstufigen Inkrementgebers, d.h., eines Tasters, angeordnet. Dieser kann aus zwei Einzeltastern 4a, 4b bestehen, die die gleiche Funktion haben, von denen aber auch einer zum Aktivieren und einer zum Deaktivieren eingesetzt sein kann. Oberhalb der angesprochenen Einheit sind zwei Anzeigeeinrichtungen vorgesehen, nämlich eine Anzeigeeinrichtung 1b, die eine vergangene Zeit einer eingestellten Beschleunigung anzeigt und eine Anzeigeeinrichtung 1c, die eine eingestellte Beschleunigung anzeigt. Die eingestellte Beschleunigung kann alternativ auch über eine Markierung auf dem als Rändelrad oder Rolle ausgestalteten Inkrementgebers des Beschleunigungs-Bedienelements 1a vorgesehen sein. Oberhalb der Anzeigeeinrichtungen 1b, 1c ist oberhalb und hinter der linken Speiche 8 eine Schaltwippe 5 vorgesehen, mit der eine Gangwahl erfolgen kann. Die Schaltwippe 5 kann zur Gangwahl (hoch- und runterschalten) nach vorne (vom Fahrer weg) bzw. nach hinten (zum Fahrer hin) gedrückt werden. Alternativ kann eine linke Schaltwippe 5 (an der linken Speiche 8) zum Schalten in eine Richtung (hoch- oder runterschalten) und eine rechte Schaltwippe 6 (an der rechten Speiche 9 des Lenkrads) zum Schalten in die andere Richtung (runter- oder hochschalten) vorgesehen sein. Die Anzeigeeinrichtungen 1b, 1 c können alternativ, alternierend, zusätzlich oder bei einer jeweiligen Betätigung auch eingestellte Werte des Geschwindigkeits-Bedienelements 2 und/oder des Abstands-Bedienelements 3 und/oder der Schaltwippe(n) 5 (6) anzeigen.

Ein Bespiel einer nicht erfindungsgemäßen Bedieneinrichtung umfasst ein Geschwindigkeits-Bedienelement 1a in Form eines als Rändelrad oder Rolle ausgestellten analogen oder quasi-analogen, d.h., stufenlosen oder sehr fein abgestuften Inkrementgebers, der als nächstes zu dem Griffbereich des Lenkrads 7 liegt. Rechts von dem Geschwindigkeits-Bedienelement 1a ist eine Geschwindigkeits-Wiederaufnahme-Taste (Resume-Taste) 2 angeordnet. Rechts davon und teilweise unterhalb der Geschwindigkeits-Wiederaufnahme-Taste 2 ist ein als Wippe ausgestaltetes Abstands-Bedienelement 3 in Form eines Inkrementgebers mit zwei Richtungen angeordnet.

Ebenfalls in der linken Speiche 8 sind unterhalb dieser aus Geschwindigkeits-Bedienelement 1a, Geschwindigkeits-Wiederaufnahme-Taste 2 und Abstands-Bedienelement 3 bestehenden Einheit rechts ein Geschwindigkeits-Setz-Taster 4a zur Übernahme einer Ist-Geschwindigkeit und links ein Deaktivierungs-Bedienelement 4b in Form von zwei einstufigen Inkrementgebern, d.h., Tastern, angeordnet. Oberhalb der angesprochenen Einheit sind zwei Anzeigeeinrichtungen vorgesehen, nämlich eine Anzeigeeinrichtung 1b, die eine vergangene Zeit einer eingestellten Beschleunigung anzeigt und eine Anzeigeeinrichtung 1 c, die eine eingestellte Beschleunigung anzeigt. Diese beiden Anzeigeeinrichtungen 1b, 1 c können auch entfallen, insbesondere in dem Fall, dass eine Anzeige über ein zentrales Anzeigeinstrument erfolgt.

Oberhalb der Anzeigeeinrichtungen 1b, 1 c ist oberhalb und hinter der linken Speiche 8 ein Beschleunigungsbedienelement 5 vorgesehen, das zur Beschleunigungswahl (stärker Beschleunigen bzw. verzögern) nach vorne (vom Fahrer weg) bzw. nach hinten (zum Fahrer hin) gedrückt werden kann. Die Bedienung erfolgt vorzugsweise so, dass ein Wegdrücken des Beschleunigungsbedienelements 5 eine stärke Beschleunigung und ein heranziehen eine stärkere Verzögerung (negative Beschleunigung) bewirkt. Alternativ kann ein linkes Beschleunigungsbedienelement 5 (an der linken Speiche 8) zum Beschleunigen in eine Richtung (positiv oder negativ) und ein rechtes Beschleunigungsbedienelement 6 (an der rechten Speiche 9 des Lenkrads) zum Beschleunigen in die andere Richtung (negativ oder positiv) vorgesehen sein. Das/die Beschleunigungsbedienelement/e können auch eine Doppelfunktion aufweisen, z.B. während aktiviertem Abstandsregelungssystem und/oder aktivierter Fahrgeschwindigkeitsregelung als Beschleunigungsbedienelement und sonst als Schaltwippe(n), womit eine Gangwahl erfolgen kann, wie oben bei der ersten Ausgestaltung der hier dargestellten bevorzugten Ausführungsform der erfindungsgemäßen Bedieneinrichtung dargestellt.

Die Anzeigeeinrichtungen 1b, 1 c können alternativ, alternierend, zusätzlich oder bei einer jeweiligen Betätigung auch eingestellte Werte des Geschwindigkeits-Bedienelements 1a und/oder des Abstands-Bedienelements 3 und/oder der Schaltwippe(n) 5 (6) anzeigen. Die eingestellte Geschwindigkeit kann alternativ auch über eine Markierung auf dem als Rändelrad oder Rolle ausgestalteten Inkrementgebers des Geschwindigkeits-Bedienelements 1a vorgesehen sein.

Das zuvor beschriebene Beschleunigungsbedienelement (BBE) kann zum Komfortgewinn auch auf eine Wirkung um DME und Bremsmanipulationen erweitert werden. Weiter ist auch eine Ausdehnung des Bedienelements auf das Gaspedal und die Bremse des Fahrzeugs möglich.

Mit der erfindungsgemäßen Anordnung einer Beschleunigungsbedienung lassen sich dann beispielsweise Fahrsituationen wie nahe Einscherer ohne Bremsbetätigung und damit ohne Deaktivierung des Assistenzsystems bewältigen.

Weitere über die erfindungsgemäße Einkopplung einer vom Fahrer des Kraftfahrzeugs vorgebbaren Zusatzbeschleunigung mögliche Funktionen sind:
- Anhalten mit dem Beschleunigungsbedienelement ohne Regelung auf ein vorausfahrendes Fahrzeug und Kombination mit Stillstandsmanagement,
- Anfahren mit Beschleunigungsbedienelement ohne Regelung auf ein vorausfahrendes Fahrzeug durch signifikantes Betätigen in Beschleunigungsrichtung,
- korrigiertes Anhalten mit Regelung auf ein vorausfahrendes Fahrzeug im Zusammenhang mit einer Stopp+Go-Funktion des ACC-Systems,
- kontrolliertes Aufschließen während des Anhaltevorgangs mit Regelung auf ein vorausfahrendes Fahrzeug im Zusammenhang mit der Stopp+Go-Funktion des ACC-Systems,
- Anfahr-Kommando mit Regelung auf ein vorausfahrendes Fahrzeug im Zusammenhang mit der Stopp+Go-Funktion des ACC-Systems durch signifikantes Betätigen in Beschleunigungsrichtung.

Gemäß weiteren nicht zur Erfindung gehörendenden Beispielen ist die Beschleunigungsbedienung nicht ausschließlich an das Vorhandensein eines Abstandsregelsystems wie ACC gebunden. Folgende Varianten sind möglich:
A) Die erfindungsgemäße Beschleunigungsbedienung kann - wie zuvor beschrieben - vollkommen konsistent auch in eine Fahrgeschwindigkeitsregelung mit vörwählbarer Wunschgeschwindigkeit (v_{wunsch}) integriert werden. Die Vorteile einer kürzzeitigen Fahrgeschwindigkeitsverringerung oder Fahrgeschwindigkeitserhöhung mittels eines Beschleunigungsbedienelements sind für den Fahrer genauso ersichtlich, wie im Falle einer ACC-Regelung.
B) Auch in Fahrgeschwindigkeitsregelungen ohne vorwählbare Wunschgeschwindigkeit kann die erfindungsgemäße Beschleunigungsbedienung vollkommen konsistent integriert werden: bei manueller Vorgabe einer positiven Beschleunigung durch das Beschleunigungsbedienelement beschleunigt das Fahrzeug entsprechend der Vorgabe, beim Loslassen des Beschleunigungsbedienelements (und einer damit verbundenen automatischen Rückstellung in eine Neutralposition) hält das Fahrzeug die momentane Geschwindigkeit, solange die Fahrgeschwindigkeitsregelung aktiv ist. Bei manueller Vorgabe einer negativen Beschleunigung durch das Beschleunigungsbedienelement verzögert das Fahrzeug entsprechend der Vorgabe, beim Loslassen des Beschleunigungsbedienelements (und einer damit verbundenen automatischen Rückstellung in eine Neutralstellung) hält das Fahrzeug die momentane Geschwindigkeit, solange die Fahrgeschwindigkeitsregelung aktiv ist. Kommt das Fahrzeug während einer manuellen Vorgabe einer negativen Beschleunigung durch das Beschleunigungsbedienelement zum Stillstand, so wird ein Stillstandsmanagment aktiv. Ein Anfahren bzw. Hochbeschleunigen des Fahrzeugs z.B. durch Betätigen des Beschleunigungsbedienelements in Richtung "Beschleunigen" kann ebenfalls konsistent implementiert werden.
   Diese Variante ist dann vergleichbar mit einer konventionellen Bedienung einer Fahrgeschwindigkeitsregelung, bei der z.B. durch dauerhaftes Drücken einer "+"-Taste eine Beschleunigung eingeleitet wird und durch dauerhaftes Drücken "-"-Taste eine Verzögerung eingeleitet wird. Der wesentliche Unterschied zu einer solchen konventionellen Bedienauslegung besteht jedoch in der Dosierbarkeit der jeweiligen Beschleunigung oder Verzögerung, dem möglichen Betriebsbereich, über den gesamten Geschwindigkeitsbereich incl. des Stillstands und der beschriebenen Stillstands- und Anfahrfunktion.
C) Eine Beschleunigungsbedienung kann auch ohne Fahrgeschwindigkeitsregelung verwendet werden, z.B. als manuelle Beschleunigungs- oder Bremsbetätigung. Die Bremsbetätigung kann dabei bis hin zu einer Notbremse ausgelegt werden. Die Vorteile können in der wesentlich schnelleren Fahrzeugreaktion durch geringere Betätigungszeiten liegen, z.B. aufgrund der geringeren Masse eines Daumens zur Betätigung eines Beschleunigungsbedienelements gegenüber der relativ großen Masse eines Beins mit Schuhwerk zur Betätigung der Betriebsbremse. Dies kann besonders in Notbremssituationen einige wertvolle Meter Bremsweg einsparen, insbesondere, da das Beschleunigungsbedienelement so ausgelegt sein kann, einen "Anschlag" schneller zu erreichen, als das bei der Betriebsbremse, die dann "mit voller Kraft" getreten werden muss, der Fall ist.

### Bezugszeichenliste

- 1a: Beschleunigungs-Bedienelement/ Geschwindigkeits-Bedienelement
- 1 b: Anzeige einer vergangenen Zeit einer eingestellten Beschleunigung
- 1 c: Anzeige einer eingestellten Beschleunigung
- 2: Geschwindigkeits-Bedienelement/ Geschwindigkeits-Wiederaufnahme-Taste
- 3: Abstands-Bedienelement
- 4a: Deaktivierungs-Bedienelement/ Geschwindigkeits-Setz-Taster
- 4b: Deaktivierungs-Bedienelement
- 5: Schaltwippe/ Beschleunigungs-Bedienelement
- 6: Schaltwippe/ Beschleunigungs-Bedienelement
- 7: Lenkrad
- 8: linke Speiche des Lenkrads
- 9: rechte Speiche des Lenkrads

## Patentansprüche

1. Fahrzeug mit einem Fahrerassistenzsystem, wobei das Fahrerassistenzsystem einen Regler zur Regelung der Beschleunigung des Kraftfahrzeuges gemäß einer Sollbeschleunigung aufweist, mit einem Abstandregelsystem, sowie mit einer am Fahrzeuglenkrad angeordneten Bedieneinrichtung für das Fahrerassistenzsystem, die ein Beschleunigungs-Bedienelement (1 a) zur Eingabe einer vom Fahrer des Kraftfahrzeugs vorgebbaren auf den Regler wirkenden Zusatzbeschleunigung, **dadurch gekennzeichnet, dass** das Beschleunigungs-Bedienelement (1a) an einer Speiche des Lenkrads (7) des Kraftfahrzeugs angeordnet ist und einen Inkrementgeber (1a) in Form eines Rändelrads oder einer Rolle mit zwei Richtungen umfasst, wobei ein als Wippe ausgestaltetes Abstands-Bedienelement (3) zum Setzen von Wunschabständen ebenfalls in Form eines Inkrementgebers mit zwei Richtungen axial zentriert zum Bedienelement (1a) angeordnet ist.

2. Fahrzeug nach Anspruch 1, **dadurch gekennzeichnet, dass** das Beschleunigungs-Bedienelement eine eingestellte Beschleunigung anzeigt.

3. Fahrzeug nach einem der vorstehenden Ansprüche, **dadurch gekennzeichnet, dass** das Beschleunigungs-Bedienelement eine vergangene Zeit einer eingestellten Beschleunigung anzeigt.

4. Fahrzeug nach Anspruch 1, **dadurch gekennzeichnet, dass** das Beschleunigungs-Bedienelement an einer linken Speiche (8) des Lenkrads des Kraftfahrzeugs angeordnet ist.

5. Fahrzeug nach Anspruch 1, **dadurch gekennzeichnet, dass** ein weiteres Bedienelement des Fahrerassistenzsystems ein Geschwindigkeits-Bedienelement (2) ist, das einen Inkrementgeber mit zwei Richtungen umfasst, um Wunschgeschwindigkeiten zu setzen.

6. Fahrzeug nach Anspruch 5, **dadurch gekennzeichnet, dass** das Geschwindigkeits-Bedienelement ein Rändelrad oder eine Rolle umfasst.

7. Fahrzeug nach einem der Ansprüche 5 bis 6, **dadurch gekennzeichnet, dass** ein weiteres Bedienelement des Fahrerassistenzsystems ein Deaktivierungs-Bedienelement (4) ist, das einen Inkrementgeber mit einer Stufe umfasst, um das Fahrerassistenzsystem zu deaktivieren.

8. Fahrzeug nach Anspruch 7, **dadurch gekennzeichnet, dass** das Deaktivierungs-Bedienelement einen Taster umfasst.

9. Fahrzeug nach einem der Ansprüche 5 bis 8, **dadurch gekennzeichnet, dass** ein weiteres Bedienelement des Fahrerassistenzsystems ein Geschwindigkeits-Setz-Taster (4a) ist, der einen Inkrementgeber mit einer Stufe umfasst, um eine Ist-Geschwindigkeit als Sollgeschwindigkeit zu setzen.

10. Fahrzeug nach einem der vorstehenden Ansprüche, **dadurch gekennzeichnet, dass** das Beschleunigungs-Bedienelement bei inaktiviertem Regler zur Regelung der Beschleunigung des Kraftfahrzeugs eine Funktion einer Schaltwippe zur Wahl eines Gangs eines Getriebes des Kraftfahrzeugs erfüllt.

## Claims

1. A vehicle with a driver assistance system, the driver assistance system having a controller to control the acceleration of the motor vehicle according to a desired acceleration, with a distance control system, and with an operating device for the driver assistance system arranged on the vehicle steering wheel, the operating device having an acceleration operating element (1 a) to input an additional acceleration, which acts on the controller and can be predetermined by the driver of the motor vehicle, **characterised in that** the acceleration operating element (1 a) is arranged on a spoke of the steering wheel (7) of the motor vehicle and comprises an increment encoder (1 a) in the form of a knurled wheel or a roller with two directions, a distance operating element (3) configured as a rocker to set desired distances, also in the form of an increment encoder with two directions, being arranged axially centred with respect to the operating element (1 a).

2. A vehicle according to claim 1, **characterised in that** the acceleration operating element displays a set acceleration.

3. A vehicle according to either of the preceding claims, **characterised in that** the acceleration operating element displays an elapsed time of a set acceleration.

4. A vehicle according to claim 1, **characterised in that** the acceleration operating element is arranged on a left-hand spoke (8) of the steering wheel of the motor vehicle.

5. A vehicle according to claim 1, **characterised in that** a further operating element of the vehicle assistance system is a speed operating element (2), which comprises an increment encoder with two directions in order to set desired speeds.

6. A vehicle according to claim 5, **characterised in that** the speed operating element comprises a knurled wheel or a roller.

7. A vehicle according to either of claims 5 or 6, **characterised in that** a further operating element of the vehicle assistance system comprises a deactivation operating element (4), which comprises an increment encoder with a step to deactivate the driver assistance system.

8. A vehicle according to claim 7, **characterised in that** the deactivation operating element comprises a push button.

9. A vehicle according to any one of claims 5 to 8, **characterised in that** a further operating element of the driver assistance system is a speed-set push button (4a), which comprises an increment encoder with a step to set an actual speed as the desired speed.

10. A vehicle according to any one of the preceding claims, **characterised in that** when the controller for controlling the acceleration of the motor vehicle is inactivated, the acceleration operating element fulfils a function of a rocker switch for selecting a gear of a transmission of the motor vehicle.

## Revendications

1. Véhicule équipé d'un système d'assistance de conduite comportant un régulateur pour réguler l'accélération du véhicule sur une accélération de consigne, un système de régulation de distance ainsi qu'une installation d'actionnement montée sur le volant du véhicule pour le système d'assistance de conduite avec un élément de manoeuvre d'accélération (1a) pour permettre au conducteur du véhicule d'entrer une accélération complémentaire prédéfinie agissant sur le régulateur, véhicule **caractérisé en ce que**
l'élément de manoeuvre d'accélération (1a) est sur un rayon du volant (7) du véhicule et comporte un générateur incrémental (1a) sous la forme d'une roue moletée ou d'un galet bidirectionnel,
* un élément de manoeuvre de distance (3) en forme d'élément basculant étant prévu pour fixer les distances demandées, également sous la forme d'un générateur incrémental bidirectionnel, installé de manière centrée axialement par rapport à l'élément de manoeuvre (1a).

2. Véhicule selon la revendication 1,
**caractérisé en ce que**
l'élément de manoeuvre d'accélération indique l'accélération réglée.

3. Véhicule selon l'une des revendications précédentes,
**caractérisé en ce que**
l'élément de manoeuvre d'accélération indique la durée passée d'une accélération réglée.

4. Véhicule selon la revendication 1,
**caractérisé en ce que**
l'élément de manoeuvre d'accélération est prévu sur le rayon gauche (8) du volant du véhicule.

5. Véhicule selon la revendication 1,
**caractérisé en ce qu'**
un autre élément de manoeuvre du système d'assistance de conduite, est un élément de manoeuvre de vitesse (2) comportant un générateur incrémental bidirectionnel pour régler des vitesses demandées.

6. Véhicule selon la revendication 5,
**caractérisé en ce que**
l'élément de manoeuvre de vitesse comporte une roue moletée ou un galet.

7. Véhicule selon l'une des revendications 5 à 6,
**caractérisé par**
un autre élément de manoeuvre du système d'assistance de conduite qui est un élément de neutralisation (4) comportant un générateur incrémental avec un échelon pour neutraliser le système d'assistance de conduite.

8. Véhicule selon la revendication 7,
**caractérisé en ce que**
l'élément de manoeuvre de neutralisation comporte une touche.

9. Véhicule selon l'une des revendications 5 à 8,
**caractérisé en ce qu'**
un autre élément de manoeuvre du système d'assistance de conduite est une touche de fixation de vitesse (4a) comportant un générateur incrémental avec un échelon pour fixer la vitesse réelle comme vitesse de consigne.

10. Véhicule selon l'une des revendications précédentes,
**caractérisé en ce que**
l'élément de manoeuvre d'accélération lorsque le régulateur pour réguler l'accélération du véhicule est neutralisé, assure la fonction d'un élément basculant pour sélectionner le rapport d'une transmission du véhicule.
